# EUROPEAN PATENT SPECIFICATION

(11) **EP 1 561 940 B1**
(45) Date of publication and mention of the grant of the patent: **06.02.2008**
(21) Application number: 04460042.7
(22) Date of filing: 22.09.2004
(51) Int. Cl.: F02M 25/07, F02B 19/02, F02B 19/18, F02M 67/06

(54) **Gas exhaust recirculation assisted fuel injection system**
AGR-unterstützender Einspritzsystem
Un système d'injection de combustible assisté par la recirculation de gaz d'échappement

(43) Date of publication of application: 10.08.2005
(73) Proprietor: SZADKOWSKI I S-KA, 05-800 Pruszków (PL)
(72) Inventor: Wieslaw Wiatrak, 43-384 Jaworze (PL)
(74) Representative: Chlebicka, Lidia

(56) References cited:
- EP-A- 0 266 610
- EP-A- 0 597 713
- EP-A- 1 431 564
- DE-A1- 19 923 346

## Description

The object of the invention is a supportive system of fuel admission using energy of recirculated exhaust gases for a combustion engine, aimed at disintegrating and evaporating the injected fuel dose for its preparation for more efficient combustion.

Modem internal combustion engines are usually supplied by an injection of liquid fuel using mechanically or electro-mechanically controlled injectors, directly to the engine combustion chamber or to inlet systems. The injected fuel dose is appropriately disintegrated and evaporated for its efficient combustion in the engine.

Pneumatically-aided injection, with compressed air supplied from compressors with electronic control of its dosage to fuel injectors, e.g. in Orbital -SEFIS or Mercury - EFIS systems or others, is used in order to enhance disintegration of injected fuel drops. As a consequence of using compressed air-aided fuel injection there is a better disintegration of fuel drops, which results in faster dose combustion improving efficiency of combustion engines, and first of all, in reducing exhaust gas toxicity.

Combustion gas recirculation is nowadays widely used for combustion engines, in particular in order to decrease content of nitrogen oxides in emitted exhaust gases. Currently used exhaust gas recirculation consists in a valve-controlled intake of low pressure exhaust gas from outlet systems to engine inlet system, which additionally contributes to evaporation of the fuel in a sucked fresh engine load.

The European Patent EP0266610 describes a fuel system for internal combustion, two-cycle or four-cycle engines in which hot combustion gases are introduced under pressure to the cylinder to be next fired along with raw fuel injection. The purpose is to preheat and atomize the fuel to obtain more efficient and more complete combustion. The respective cylinders are connected by cross-passages whereby hot gases from the combustion in one cylinder will be transferred along with heated vaporized fuel to an adjacent cylinder at proper timing with an electrically triggered fuel injection valve or device.

The essence of the invention is the application of the system of fuel admission supported with recirculation of high pressure and temperature combustion gases in order to use their energy for better disintegration and evaporation of loads and, consequently, achieve better efficiency of combustion engines by intake of combustion gas directly from combustion chambers of engine cylinders. The presented engineering solution with the use of mechanically or electro-mechanically controlled recirculation valve coupled with crankshaft revolutions permits to timely deliver a dose of combustion fuel assisted by a combustion gas delivered from the cylinder in its working cycle to the second cylinder being in its compression cycle, the cylinders connected by two passages and a chamber, inserted between the passages and equipped with a valve that has ability to isolate the said chamber from the passages.

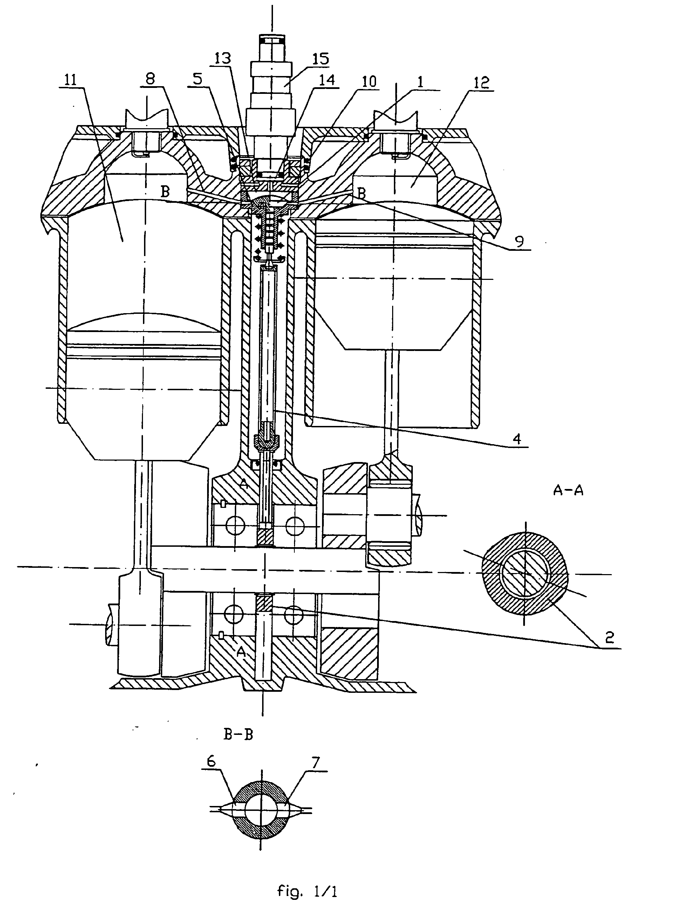

The object of the invention is presented as an example product in a drawing - Fig. 1, showing the section of a combustion engine with a combustion gas recirculation control unit, inbuilt between the engine cylinders, which forms a supportive system for fuel injection in case of a typical electro-magnetic injector.

The combustion gas recirculation control unit located between cylinders (11) and (12) of a combustion engine has a mushroom valve (1) pressed down with a spring; its movement is controlled by a cam (2) mounted on a crankshaft neck using a rod (4). The valve (1) has a valve seat (5) with two slots (6) and (7) in its face, mounted in the engine head and connected with spaces of cylinders (11) and (12) - their combustion chambers, by passages (8) and (9). The valve seat (5) is connected, using a screwed joint, with a holder (10) of a typical electro-magnetic fuel injector (15), used as a fuel dosing device and forming over the valve head (1) some space - a fuel preparation (preheat and conditioning) chamber (13). The cam (2) has two opposite lobes (see Fig. 1 - A-A) for control of the valve (1), whose head moves in the space - the fuel preparation chamber (13), connected with the injector end (15) by a conical opening (14).

Supportive action of fuel injection takes place after injection of a fuel dose onto a hot valve head (1) in the fuel preparation chamber (13) filled with combustion gas of the former process run of the admission process. Discharge of the fuel dose takes place at a preset time during the cycle, preferably after closing of the valve (1); the dose is stored in the preparation chamber (13), where it is vaporized and conditioned until the valve (1) opens and the hot pressurized combustion gas blows through the chamber (13) from the cylinder (12), being in the beginning and/or during the combustion (working) part of the IC engine cycle, via passage (9), and the said combustion gas transporting the prepared fuel dose into the related cylinder (11), being in the beginning and/or during the compression part of the IC engine cycle, via passage (8). The described fuel admission process occurs alternatively between related cylinders (11) and (12), the flow of combustion gas blowing through at preset, precisely timed intervals alternatively in opposite directions.

Control of the combustion gas assisted admission process, using the presented system, results in evaporation, micro and macro turbulences of a load in the combustion chamber of the cylinder (11) and proceeds alternately for the cylinder (12), which enhances engine efficiency and particularly provides reduction of toxic compound content in the engine exhaust gas.

## Claims

1. A combustion gas assisted fuel admission system for a combustion engine with an even number of cylinders, having valves, synchronized with the revolutions of engine crankshaft, which draw combustion gas directly from the spaces of cylinders in their working cycle to the combustion chambers of cylinders in the compression cycle, simultaneously causing the combustion gas recirculation together with fuel doses, **characterized in that** there is a fuel dose preparation chamber (13) equipped with an on-off valve (1) and fuel dosing device (15), which is inserted in-between the related cylinders (11) and (12) connected by passages (8) and (9).

2. The system according to claim 1 **characterized in that** the passages (8) and (9) for intake of combustion gas from the chambers of cylinders are alternately the ducts for flow of the gasified fuel doses through slots (6) and (7) in the face of valve seat (5) and which are blown away from the fuel preparation chamber (13).

## Patentansprüche

1. Ein mit Abgasen unterstütztes Treibstoffversorgungssystem für einen Verbrennungsmotor mit gerader Zylinderzahl, ausgestattet mit Ventilen, synchronisiert mit den Umdrehungen der Kurbelwelle, die die Abgase direkt von dem Zylinderbereich im deren Kompressionszyklus ansaugt und gleichzeitig die Rezirkulation der Abgase mit Kraftstoffdosen bewirkt; es zeichnet sich **dadurch** aus, dass es eine Kammer (13) zur Vorbereitung der Kraftstoffdosen hat, die mit einem Ein-und-Aus-Ventil (1) sowie einem Treibstoffdosiergerät ausgestattet ist, das sich zwischen den zusammenhängenden Zylindern (11) und (12), die mit den Verbindungsstücken (8) und (9) verbunden ist.

2. Das System gemäß Anspruch 1 zeichnet sich **dadurch** aus, dass die Verbindungsstücke (8) und (9) für die Aufnahme der Abgase von den Zylinderkammern alternativ Leitungen für den Fluss der Dosen des gasifizierten Treibstoffs durch die Schlitze (6) und (7) vor dem Ventilsitz darstellen, die aus der Vorbereitungskammer (13) ausgeblasen werden.

## Revendications

1. Le système d'admission de combustible assisté au gaz d'échappement pour le moteur à combustion avec numéro pair de cylindres, ayant les valves synchronisées avec les révolutions du vilebrequin, qui tire le gaz d'échappement directement de l'espace des cylindres dans leur cycle de travail à la chambre de combustion des cylindres dans le cycle de compression, simultanément provoquant la recirculation de gaz d'échappement avec une dose de combustible, **caractérisée par le fait qu'**il y a une chambre de préparation de la dose de combustible (13) équipée d'une soupape à deux positions (1) et un doseur de combustible (15), qui est insérée parmi de cylindres relatives (11) et (12) jointe par les passages (8) et (9).

2. Le système conforme à la revendication no 1 **caractérisé par le fait que** les passages (8) et (9) à la lumière de gaz d'échappement des chambres de cylindres sont alternativement conduit pour le flot de la dose gazéifiée de combustible par les lumières (6) et (7) dans la face du siège de valve (5) et qui est expiré de la chambre de préparation du combustible (13).
